# EUROPEAN PATENT SPECIFICATION

(11) **EP 2 886 396 B1**
(45) Date of publication and mention of the grant of the patent: **26.10.2016**
(21) Application number: 14196846.1
(22) Date of filing: 08.12.2014
(51) Int. Cl.: B60R 13/10

(54) **Identification plates**
Identifikationsschilder
Plaques d'identification

(30) Priority: 18.12.2013 GB 201322473
(43) Date of publication of application: 24.06.2015
(73) Proprietor: Hills Numberplates Limited, Witton, Birmingham B6 7JJ (GB)
(72) Inventor: Taffinder, Richard, Lichfield, Staffordshire WS14 9NS (GB)
(74) Representative: Moore, Christopher Mark

(56) References cited:
- EP-A1- 1 385 133
- DE-U1- 29 511 628
- FR-A1- 2 853 604
- GB-A- 2 159 313

## Description

This invention relates to identification plates and, in particular, to identification plates which indicate the provenance of an object to which they are attached. Such plates are conventionally termed 'licence plates' or 'number plates' when attached to a motor vehicle.

From 01 September 2001, each United Kingdom licence plate has had to conform to British Standard BSAU 145d which governs, inter alia, the impact resistance and the minimum retro-reflectivity of the plate, as well as the size and font of the characters. Similar, although in some cases less stringent, provisions exist across the entire European Union, as they do in most other countries across the world.

Two types of number plate dominate, namely those made with a metal substrate and those made with a plastics material substrate.

Metal substrate number plates typically use aluminium (although sometimes steel is used) as the substrate material. A method of formation comprises providing a flat aluminium blank which, on a major surface, is painted black and applying a retro-reflective sheet material to the black surface. The retro-reflective blank may then be stamped (embossed) to form a peripheral rigidising rim and upstanding indicia, to provide the characters of the number plate. Any retro-reflective material remaining on the characters can be removed to reveal black characters upstanding from a retro-reflective background. Alternatively, a retro-reflective covered blank may be provided which is embossed; the embossing operation need not separate or damage the retro-reflective layer and ink or other marking material can be applied in the region of the raised characters (as well as the rim, if provided). As will be appreciated, such methods require relatively expensive stamping and type-setting apparatus if mass production is to be contemplated. Stamping methods of forming number plates are described in FR2853604, FR2849523, GB2127750, DE29511 U1 and EP1385133.DE29511628 U1 is the closest prior art document and discloses a method and a number plate according to the preambles of claims 1 and 7.

Plastics material substrates may be formed in two ways. The first is to provide a relatively thick and rigid transparent plastics material (which may be poly methyl methacrylate [PMMA] or sometimes polycarbonate [PC]) to which is adhered a retro-reflective sheet material, indicia being provided between the transparent plastic material and the retro-reflective sheet material. Previous methods of formation relied on the so-called 'kiss cutting' technique wherein a very thin foil is cut to form indicia and the so-formed indicia covered by a backing layer. Examples of this technique are disclosed in GB2159313 and FR2853855.

Because of the inherent processability issues relating to kiss-cutting type techniques it is now usual to print indicia to the retro-reflective sheet material or to the thick transparent plastics material (e.g. GB2126386 and EP806752). Printing to the retro-reflective material is known to be problematic because of the nature of retro-reflective materials. Printing to relatively rigid substrates is also known to be problematic in terms of processing speed and costly if printing or other processing errors are made. These number plates do have some attractive qualities but, crucially, suffer because any impact from, for example, a stone can crack or otherwise disfigure the number plate.

A second way of producing number plates using a plastics substrate material is disclosed in our patent EP1399333. In this method a substrate material is provided to which a retro-reflective sheet material is adhered. Indicia corresponding to the desired number plate characters (as well as other indicia) may be printed, in reverse, on a relatively thin and flexible transparent sheet material. The transparent sheet material may then be adhered to the retro-reflective surface such that the indicia are sandwiched therebetween. As well as manifold processing and cost advantages, these number plates have the further advantage that an impact from, for example, a stone is not likely to disfigure the indicia because any cracking will be experienced by the backing plate rather than the front plate.

Clearly, deploying printing techniques rather than the embossing technique discussed above may be advantageous in terms of flexibility and control but there remains amongst some users a perception (and in some countries a requirement) that metal substrates are preferable.

It is also known that number plates (and other identification plates) are the target of criminals. Such thefts may occur to 'clone' another vehicle with the stolen number plate. This may be done to participate in drive-off events, such as where a vehicle is driven from a petrol forecourt to avoid payment, even where ANPR (Automatic Number Plate Recognition) technology is deployed or to avoid city congestion charges or lane limitation charges, for example. Accordingly, techniques have been established for making number plates secure to prevent, or at least make more difficult, removal of number plates from vehicles. Our patent EP1893447 discloses one or more solutions to secure a number plate to a vehicle.

There is a desire for a new number plate design which can be used in plural territories around the world and which, consequently, satisfies the various territorial requirements. There is a further need to provide a number plate which has better defined, or at least gives the impression of better defined characters. This may be useful to improve the accuracy of ANPR. There is an increasing need for further theft resistant identification plate (e.g. number plate) solutions.

It is an object of this invention to satisfy one or more of the problems with the prior art and/or to satisfy current and future needs for new number plates and/or to provide a further theft resistant number plate.

Accordingly, a first aspect of the invention provides a method of forming a number plate (e.g. for a vehicle), the method comprises the steps of:
a) providing a substrate having a first and second major surface;
b) securing to the first major surface of the substrate a sheet material;
c) forming (e.g. cutting) the shape of indicia (e.g. indicia relating to a vehicle to which the plate is to be attached) from the sheet material;
d) removing excess sheet material from around the formed indicia;
characterised in that the sheet material has a thickness of at least 0.25mm and further comprising a step e), which occurs sequentially with or subsequent to step c), and which comprises cutting into the substrate.

The sheet material is preferably at least 0.5mm thick.

Preferably, the second major surface is for mounting to or adjacent to a site of use; e.g. such that the indicia are visible to a viewer on the first major surface.

Step c) and/or step e) may comprise cutting into the substrate to a depth of more than 0.1 mm, preferably from 0.1 to 0.5mm, for example from 0.15 to 0.45mm, say from 0.18 to 0.35 mm. The width of the cut may be from 0.1 to 0.9mm, for example from 0.1 to 0.6mm, say from 0.25 to 0.5mm.

Step e) may comprise sequentially or subsequently cutting into the substrate to beyond 5, 10, 15, 20, 25, 30, 35, 40, 45, 50, 55, 60, 65, 70, 75, 80, 85, 90, 95% of the thickness of the substrate at least around a part of the one or more indicia. In an embodiment, step e) comprises sequentially or subsequently cutting through the substrate intermittently to provide a frangible portion corresponding in shape to said indicia. For example, the majority of a region delimiting any particular indicia may be cut so as to generate a line of weakness, which, in most cases, will be the same shape as at least a part of said at least one indicia.

The sheet material is preferably formed from a plastics material, for example ABS.

Preferably the substrate comprises a transparent material which provides the first major surface. Cutting into the transparent material of the substrate is advantageous because it may help to provide a shadow or internal reflection effect which enhances the visual impact of the number plate. Moreover, by cutting into the substrate a permanent record of the intended indicia is provided on the substrate. This provides quick and easy 'visual' tamper evident functionality.

Preferably, the forming and/or cutting step e) and/or step d and/or step e) may be undertaken using a router, for example a CNC router which may use mechanical cutting means or non-mechanical (e.g. laser, abrasive fluid) forming or cutting means.

Preferably the sheet material is secured to the substrate using an adhesive. Preferably step c) or d) is undertaken before the or any adhesive has fully cured.

The substrate may comprise, at its second major face a substrate adhesive. The adhesive may be provided for the purposes of securing the plate to a site of use. The method may further comprise cutting through the substrate adhesive to provide one or more frangible adhesive portions, preferably in the form of one or more indicia and/or one or more component thereof.

A second aspect of the invention provides a number plate comprising a substrate having a substantially flat first major surface and one or more raised indicia, characterised in that the one or more raised indicia extend from 0.25 to 5mm from the surface of the substrate and wherein around at least some of said one or more indicia is a trench or rebate extending from the first major surface into the substrate.

The raised indicia may be secured to the flat first major surface. The trench or rebate may extend outwardly from the periphery of said one or more indicia. The trench or rebate may have a width, at the first major surface of the substrate of from 0.05 to 0.9mm, for example from 0.1 to 0.6mm, say from 0.25 to 0.5mm.

The depth of the trench or rebate may be more than 0.1 mm, preferably from 0.1 to 0.5mm, for example from 0.15 to 0.45mm, say from 0.18 to 0.35 mm. The trench or rebate may extend intermittently around at least a component of the indicia thereby to provide a frangible portion corresponding to the shape of the at least a component of the indicia.

Preferably the substrate comprises a transparent material at the first major surface. The transparent material may be a relatively thin, e.g. less than 1 mm thick, less than 0.9, 0.8, 0.7, 0.6, 0.5, 0.4, 0.3, 0.2, 0.1 mm thick, for example from 10 µm to 999 µm from 50 to 150 µm, and preferably from 55 to 95 µm. Alternatively, the transparent material may be relatively thick, e.g. from 1 to 5 mm thick, say 1.5 to 4.5, 2 to 4, 2.5 to 3.5, for example 3 mm thick. The relatively thick transparent material may be formed of PMMA or PC. The relatively thin transparent material may be formed from polyester, poly vinyl chloride, PMMA, PMA, vinyl ester and other transparent plastics materials.

The substrate preferably comprises a retro-reflective material.

The substrate may comprise a plastics or metal backing layer. If metal, the backing layer may comprise aluminium or steel, for example from 0.5 to 2 mm thick, preferably from 0.9 to 1.8 mm thick, for example from 1 to 1.5 mm thick. If plastics, the backing layer may be formed from ABS or polyamide, and may be for example plastics (e.g. ABS) of from 2.0 to 5 mm thick, say from 2.5 to 4 mm thick.

In order that the invention may be more fully understood it will now be described by way of example only and with reference to the accompanying drawings in which:
Figure 1A is a first embodiment of identification plate according to the invention;
Figure 1B is a magnified view of a part of Figure 1A;
Figure 1C is a view along line *a*-*a* of Figure 1A;
Figure 1D is a magnified view of a part of Figure 1 C;
Figure 2A is a second embodiment of identification plate according to the invention;
Figure 2B is a magnified view of a part of Figure 2A;
Figure 3 is a schematic of a method according to the invention;
Figure 4A is a sectional view of an embodiment of the invention;
Figure 4B is a magnified view of a part of Figure 4A;
Figure 5A is a plan view of the embodiment of Figure 4;
Figure 5B is a magnified view of a part of Figure 5A; and
Figure 6 is a schematic of a method and parts of the invention.

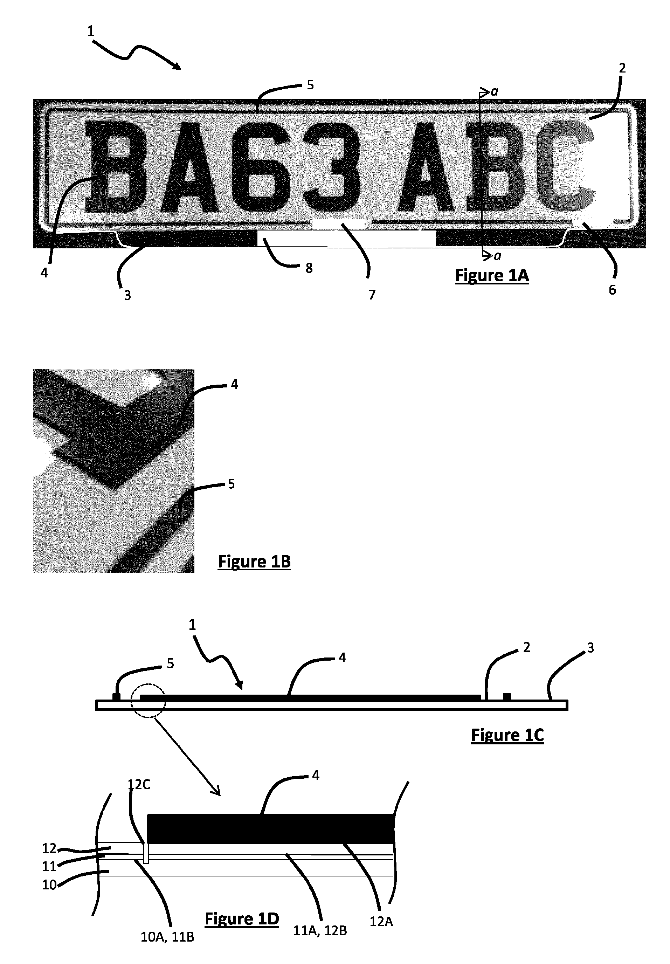

Referring first to Figure 1A, there is shown an identification plate (a vehicle number plate) 1 having a main portion 2 and an optional subsidiary, lip, portion 3. The main portion 2 is rectangular and the optional subsidiary portion 3 extends from one of the longer sides of the main portion 2.

The main portion 2 carries principal indicia 4 which is indicative of the provenance of the article to which the identification plate is usually associated. In the case of a vehicle number plate, the principal indicia 4 is the vehicle registration identifier. The main portion 2 also carries an optional peripheral border 5, which may be interrupted at one or more locations 5A to allow secondary indicia 6 and/or tertiary indicia 7.

The subsidiary portion 3 may carry subsidiary indicia 8.

As shown in Figure 1B, the primary indicia 4 is raised from the surface of the main portion 2, as is the peripheral border 5. One or more of the secondary 6, tertiary 7 and/or subsidiary indicia 8 may be raised from the respective surface of the main 2 or subsidiary 3 portions. The primary indicia 4, and peripheral border 5 may extend 0.25 to 5 mm away from the surface of the main portion 2, for example from 0.5 to 3mm.

Referring to Figures 1C and 1D, the identification plate 1 comprises a substrate 10 to a first major surface 10A of which is secure a retro-reflective sheet 11, to a first major surface 11A of which is a transparent sheet material 12 which carries, on a first major surface 12A, upstanding principal indicia 4 and optional peripheral, preferably upstanding, border 5.

Outboard and around each (or at least a part of one or more of each) component of the primary indicia 4 is a rebate 12C. As is best seen in Figure 1B, the rebate 12B gives the appearance of a shadow due to internal reflection within the transparent sheet material 12 which accentuates the impression provided by the principal indicia 4, making the indicia 4 appear more pronounced. In this way a saving of material is made because relatively thin indicia 4 give the impression of a thicker layer of indicia 4. The so-formed identification plate 1 also has an attractive tactile quality.

Each of the secondary 6, tertiary 7 and subsidiary 8 indicia may be raised from the major surface 12A of the transparent sheet material 12. Alternatively, one or more of the secondary 6, tertiary 7 and subsidiary 8 indicia (or any part thereof) may be printed, in reverse onto a second major face 12B of the transparent sheet material 12 or not-in-reverse onto the first major surface 11A of the retro-reflective material 11.

The substrate 10 may be formed from a plastics material (for example one or more of acrylonitrile butadiene styrene (ABS), polyurethane, polyamide, polyester, polyethylene) or from a metal, for example aluminium or steel. In an embodiment the substrate 10 is aluminium and is from 0.5 to 3 mm thick, for example from 0.9 to 1.5 mm thick.

The retro-reflective sheet material 11 is preferably UK7100 or UK7101 available from 3M Corporation of Minnesota USA, although other retro-reflective materials such as D4512 and D4504 (Nikkalite) available from Nippon Carbide Industries may be used. Other grades from other manufacturers are also suitable.

The transparent sheet material 12 is preferably formed from polyester, and is preferably about 70µm thick.

The transparent sheet material 12 may be printed on its second major face 12B to carry indicia, for example some or all of the whole or part of one or more of the secondary, tertiary or subsidiary 8 indicia may be printed onto the second major face 12B of the transparent sheet material 12, for example using the method as set out in our patent EP1399333, whereby upon fabrication those indicia are sandwiched between the second major face 12B of the transparent sheet material 12 and first major face 11A of the retro-reflective sheet material 11. Alternatively or additionally, some or all of the whole or part of one or more of the secondary, tertiary or subsidiary 8 indicia may be printed onto the first major face 11A of the retro-reflective sheet material 11, again to sandwich the indicia between the respective sheet materials.

The transparent sheet material 12 (and/or retro-reflective sheet material 11) may have indicia applied to it (for example, in reverse to the second major face 12B) via thermal transfer printing or via laser printing. If the indicia are applied via laser or thermal transfer printing the transparent sheet material 12 may be polyester with a thickness of about 75 microns. Preferably, the transparent sheet material has a paper liner material secured to one major face thereof to enable the printer (laser, thermal transfer, inkjet or other printer) to better be able to print in either 'single-shot' or continuous printing. The liner will typically be about 80 microns thick. In contrast to the transparent sheet material disclosed in EP1399333, the transparent sheet material of the invention will preferably not have a silicone or other adhesion resistant coating, but will usually be provided with a paper liner to help with manipulating the sheet through the printer and to protect the surface before application of the principal indicia 4.

Provided around at least some of the principal indicia 4, preferably around the entire periphery of all of each integer of the principal indicia 4 is the rebate 12C. Typically the rebate 12C may be from 0.25 to 0.5mm wide and extend into the substrate 0.1 to 0.6mm, for example from 0.25 to 0.35 mm.

The principal indicia 4 are preferably formed from acrylonitrile butadiene styrene (ABS) and are preferably from 0.3 to 5mm high, for example from 2 to 2.5 mm high. The peripheral border 5 may be 0.1 to 9.0 mm thick, preferably from 0.2 to 6 mm thick, and from 0.3 to 5mm high, for example from 2 to 2.5 mm high. In some embodiments the peripheral border 5 may be located at the periphery of the main portion 2 and in some cases (as shown in Figure 1A), the peripheral border 5 may be located inwardly of the periphery of the main portion 2.

The peripheral border 5 may be sized and located to increase and/or improve the bending resistance of the plate 1. For example, the peripheral border 5 may be located at or towards the absolute periphery of the main part 2 and/or the subsidiary part 3 and may be contoured or otherwise shaped when viewed in cross section. The peripheral border can be shaped to provide a peripheral rib identical in shape to that used to rigidify an aluminium prior art number plate.

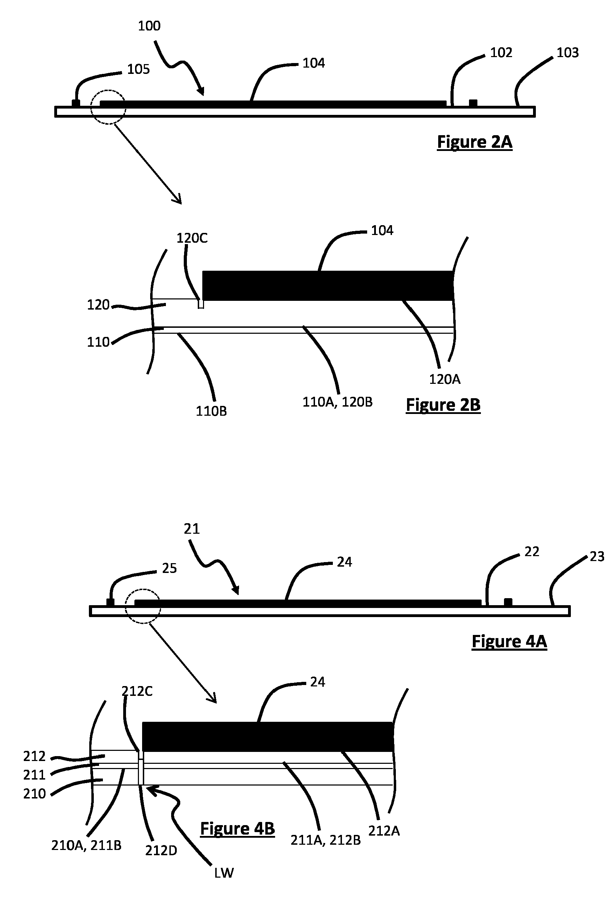

Referring to Figure 2A and 2B, there is shown a further embodiment of identification plate 100 according to the invention, having a main portion 102 and an optional subsidiary portion 103, the main portion 102 carrying principal indicia 104 and having an optional peripheral border 105.

The identification plate 100 comprises a retro-reflective sheet material 110, which at its first major surface 110A of which is a transparent material 120 which carries, on a first major surface 120A, upstanding principal indicia 104 and optional peripheral border 105. In this embodiment, the transparent material 120 is relatively thick and rigid, thereby providing the required bend resistance for the plate 100. Suitable material for the transparent material 120 may be selected from PC and PMMA. Typically, this material may be from 1 to 10 mm thick, say from 2 to 5mm thick.

Outboard and around each component of the primary indicia 104 is a rebate 120C. As before, the rebate 120C gives the appearance of a shadow due to internal reflection within the transparent material 120 which accentuates the impression provided by the principal indicia 104, making the indicia 104 appear more pronounced. In this way a saving of material is made because relatively thin indicia 104 give the impression of a thicker layer of indicia 104. Because of the relatively thick layer of transparent material 120 (as compared to the transparent material 12 of the first embodiment) the internal reflection is even more marked. This, therefore, further accentuates the effect of the upstanding indicia 24.

The plate 100 may carry further indicia which may be located between the transparent material 120 and retro-reflective sheet material 110, for example printed onto or otherwise applied to one or other or both of the transparent material 120 and retro-reflective sheet material 110.

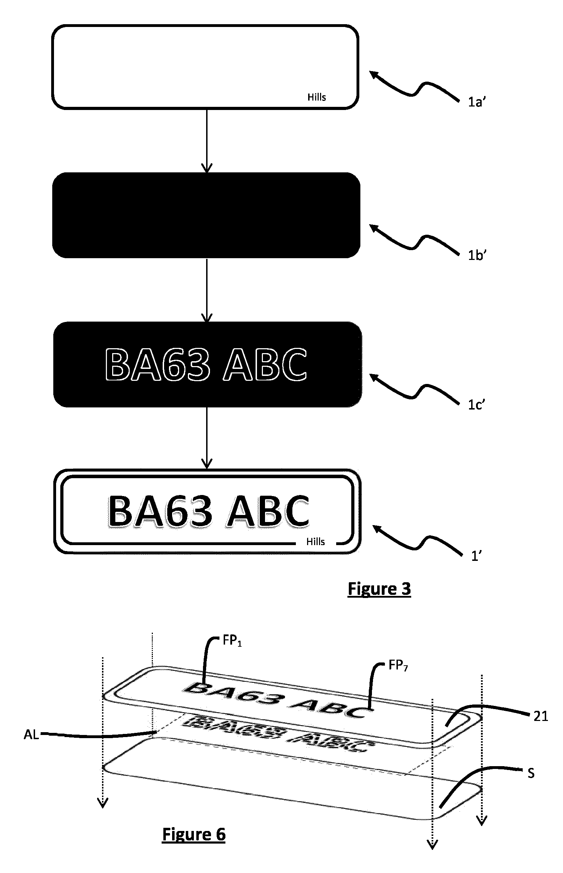

Referring now to Figure 3, there is provided a schematic for the manufacture of the first embodiment of identification plate 1 according to the invention (the method can also be used to manufacture the identification plate 100).

In brief, a plate blank 1a' is provided which comprises, in sequence, a substrate 10, a retro-reflective sheet material 11 and a transparent sheet material 12. Preferably, the retro-reflective sheet material 11 is adhered to the rigid substrate 10, the retro-reflective material 11 preferably being wet faced. The transparent sheet material 12 may have been reverse-printed on its second major face 12B with secondary indicia 6 (or other secondary indicia may have been positioned on each or both of the retro-reflective layer 11 or transparent sheet material 12) and then adhered to first major face 11A of the wet-faced retro-reflective sheet material 11, thereby sandwiching the secondary indicia 6 between the retro-reflective sheet material 11 and the transparent sheet material 12.

To the first major surface 12A of the transparent sheet material 12 of the plate blank 1a' is adhered a, preferably, plastics sheet material to form a secondary stage blank 1b'. The plastics sheet material is preferably made from acrylonitrile butadiene styrene (ABS) and is from 0.3 to 5 mm thick, say from 2 to 2.5mm thick. The plastics sheet material is preferably adhered using an adhesive which is relatively long setting, for example, it will achieve a full cure in, say, 90 minutes. A suitable adhesive is an acrylic adhesive which has a thickness of from 1 to 100µm, say from 2 to 70 µm.

A router, for example a CNC router is then used to cut into the plastics sheet material around the indicia 4 and the optional border 5. At this stage the router will cut the trench 12C around each of the integers of indicia 4 to provide a tertiary stage blank 1 c'.

The plastics sheet material which does not form the indicia 4 or optional peripheral border 5 is then removed to reveal the indicia 4 and peripheral border 5 of the completed plate 1'. The time needed to remove the excess plastic is less than the time the adhesive requires to achieve full cure. Thus, the plastics sheet material is relatively easily removed from the non-required areas and, once the adhesive has achieved full cure, which may be with the application of heat and/or pressure, it is impossible (or at least extremely difficult) to remove the indicia 4 (and peripheral border portion 5) from the plate 1'. In one example, the plastics sheet material is laminated to the transparent sheet material 12 using relatively light pressure and the whole allowed to rest for a dwell time of approximately 10 minutes. The dwell time is chosen to allow the adhesive to cure sufficiently that subsequent machining will not delaminate, or otherwise disturb the relative positions of, the plastics sheet material and transparent sheet material 12 but not so long that removing the excess plastics sheet material from the surface of the substrate will be impossible or difficult. Preferably, the dwell time is sufficient that the peel strength of the adhesive at the end of the dwell time is significantly less (e.g. from 20 to 70%) of that at full cure.

A computer-controlled router is beneficial insofar as it allows accurate cutting of the indicia 4, as well as accurate cutting of the trench 12C and accurate removal of, for example, the border in the region of the secondary indicia 6 without damaging the transparent sheet material 12.

The method of the invention provides further advantages as will be set out below.

Referring to Figure 4A and 4B, there is shown a further embodiment of identification plate according to the invention. As this is similar in many respects to the embodiment of Figure 1A, the integers will be used but with a 2 prefix.

Thus an identification plate 21 having a main portion 22 and an optional subsidiary, lip, portion 23. The main portion 22 is rectangular and the optional subsidiary portion 23 extends from one of the longer sides of the main portion 22.

The main portion 22 carries principal indicia 24 which is indicative of the provenance of the article to which the identification plate is usually associated. In the case of a vehicle number plate, the principal indicia 24 is the vehicle registration number. The main portion 22 also carries an optional peripheral border 25, which may be interrupted at one or more locations 25A to allow secondary indicia 26 or tertiary indicia 27.

The subsidiary portion 23 may carry subsidiary indicia 28.

As shown in Figure 4B, the primary indicia 24 are raised from the surface of the main portion 22, as is the peripheral border 25. One or more of the secondary 26, tertiary 27 and/or subsidiary indicia 28 may be raised from the respective surface of the main 22 or subsidiary 23 portions.

The identification plate 21 comprises a substrate 210 to a first major surface 210A of which is secure a retro-reflective sheet 211, to a first major surface 211A of which is a transparent sheet material 212 which carries, on a first major surface 212A, upstanding principal indicia 24 and optional peripheral border 25.

Outboard and around each component of the primary indicia 24 is a rebate 212C. The rebate 212B gives the appearance of a shadow due to internal reflection within the transparent sheet material 212 which accentuates the impression provided by the principal indicia 24, making the indicia 24 appear more pronounced. In this way a saving of material is made because relatively thin indicia 24 give the impression of a thicker layer of indicia 24.

Each of the secondary 26, tertiary 27 and subsidiary 28 indicia may be raised from the major surface 212A of the transparent sheet material 212. Alternatively, one or more of the secondary 26, tertiary 27 and subsidiary 28 indicia (or any part thereof) may be printed, in reverse onto a second major face 212B of the transparent sheet material 212 or onto the first major surface 211A of the retro-reflective material 211.

The substrate 210 may be formed from a plastics material (for example one or more of acrylonitrile butadiene styrene (ABS), polyurethane, polyamide, polyester, polyethylene) or from a metal, for example aluminium or steel. In an embodiment the substrate 210 is aluminium and is from 0.5 to 3 mm thick, for example from 0.9 to 1.5 mm thick.

The retro-reflective sheet material 211 is preferably UK7100 or UK7101 available from 3M Corporation of Minnesota USA.

The transparent sheet material 212 is typically plastics and may preferably be polyester, and/or is preferably a 70-100 µm, say 75 µm, thick plastics sheet.

The transparent sheet material 212 may be printed on its second major face 212B to carry indicia, for example some or all of the whole or part of one or more of the secondary, tertiary or subsidiary 28 indicia may be printed onto the second major face 212B of the transparent sheet material 212 whereby on fabrication those indicia are sandwiched between the second major face 212B of the transparent sheet material 212 and first major face 211A of the retro-reflective sheet material 211, for example using the method as set out in our patent EP1399333. Alternatively or additionally some or all of the whole or part of one or more of the secondary 26, tertiary 27or subsidiary 28 indicia may be printed onto the first major face 211A of the retro-reflective sheet material 211, again to sandwich the indicia between the respective sheet materials.

In contrast to the transparent sheet material disclosed in EP1399333, the transparent sheet material of the invention may not have a silicone or other adhesion resistant coating, but will usually be provided with a paper liner to help with manipulating the sheet through the printer and to protect the surface before application of the principal indicia 24.

The principal indicia 24 are preferably formed from ABS and are preferably from 0.3 to 5mm high, for example from 2 to 2.5 mm high. The peripheral border 25 may be 0.1 to 9.0 mm thick, preferably from 0.2 to 6 mm thick, and from 0.3 to 5mm high, for example from 2 to 2.5 mm high. In some embodiments the peripheral border 25 may be located at the periphery of the main portion 22 and in some cases (as shown in Figure 1A), the peripheral border 25 may be located inwardly of the periphery of the main portion 22.

The peripheral border 25 may be sized and located to increase and/or improve the bending resistance of the plate 21. For example, the peripheral border 25 may be located at or towards the absolute periphery of the main part 22 and/or the subsidiary part 23 and may be contoured or otherwise shaped when viewed in cross section.

Provided around at least some of the principal indicia 24, preferably around the entire periphery of all of each integer of the principal indicia 24 is the rebate 212C. The rebate 212C is typically from 0.25 to 0.5mm wide and extends into the substrate 0.1 to 0.6mm, for example from 0.25 to 0.35 mm. Intermittently, the rebate 212C is extended to provide plural apertures 212D. This intermittent extension of the rebate 212C to form plural apertures 212D allows the indicia 24 to be separable from the substrate 212 at a line of weakness LW defined by the array of apertures 212D.

Thus, and as described in relation to the tertiary stage blank 1c' of Figure 3, as the router is cutting into the transparent sheet material 212 it intermittently cuts through the entire transparent sheet material 212, retro-reflective sheet material 211 and substrate 210 to form plural apertures 212D through the plate 21, thereby defining frangible indicia which are separable from the plate 21 at respective lines of weakness.

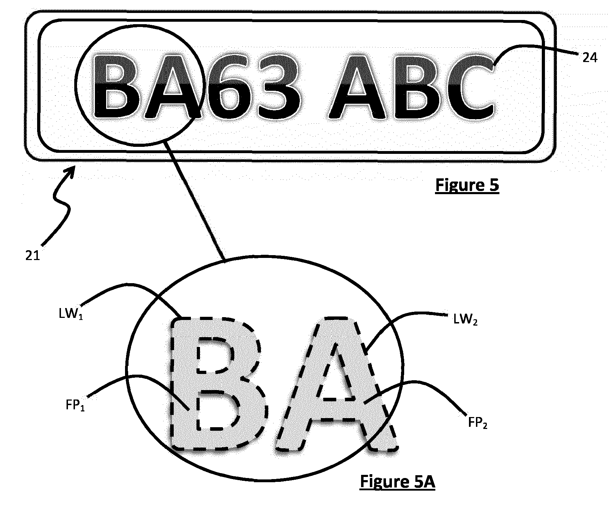

Figures 5 and 5A show a plate 21 where a first component of primary indicia 24 is surrounded by a line of weakness LW₁ and a second component of primary indicia 24 is surrounded by a second line of weakness LW₂. Not all of the components of the primary indicia 24 need be surrounded by respective lines of weakness. Indeed, it may well be beneficial if some of the components of the indicia 24 are surrounded by respective lines of weakness and some are not. It may well be that during manufacture, random one or more components of the primary indicia 24 is or are surrounded by the respective lines of weakness, thereby to make respective one or more random frangible portions, FP₁... FPₙ.

Thus, in some embodiments all of the components of the primary indicia 24 will be frangible, in some embodiments one or some of the components of the primary indicia 24 will be frangible, in some embodiments one or some of one or more random components of the primary indicia 24 will be frangible. It is also possible to cause the router to provide lines of weakness across one or more components of the primary indicia 24, thereby providing frangible portions of part of one or more components of the primary indicia 24.

Figure 6 shows how the identification plate 21 of the invention may be used. In use the plate 21 is secured to a site-of-use S by the use of an adhesive layer AL. The adhesive layer AL has frangible portions corresponding to those of the plate 21. As shown each of the components of the primary indicia 24 are frangible FP₁...FP₇ and the adhesive layer has corresponding frangible portions. It is possible to adhere the adhesive layer AL to the rear of the identification plate 21 once the adhesive layer frangible portions have been defined. However, this requires accurate location of the adhesive layer AL such that the adhesive layer frangible portions locate accurately to the frangible portions FP of the identification plate 21. Accordingly, it is preferred that the adhesive layer AL is adhered to the lower most surface of the plate 21 prior to the step shown at 1c' of Figure 3 and that the router is arranged to cut through the adhesive layer AL at the same time as it cuts through the substrate 210. The adhesive layer AL is preferably protected by a release layer (not shown) on its free surface which may also be cut through (although this is not necessary). In this fashion, the adhesive layer AL will be provided with frangible portions accurately corresponding to the frangible portions FP of the identification plate 21.

In order to locate the identification plate on a site-of-use S the release liner is simply removed and the so-exposed adhesive is brought into contact with the site-of-use, thereby securing the plate 21 to the site-of-use S.

Should a criminal or other miscreant seek to remove the identification plate 21 from a site-of-use S the adhesive of the adhesive layer 21 is stronger than the strength of the material in the line of weakness LW. Thus, as the criminal pulls the identification plate from the site of use S, the plate 21 will separate along the various lines of weakness LW thereby causing the frangible portions FP to separate from the remainder of the identification plate 21 providing evidence of tampering and rendering the plate 21 unusable.

The site-of-use S may be a vehicle, where the identification plate 21 is to be used as a number plate or another site-of-use. In some embodiments the site-of-use may comprise a backing plate to which the identification plate 21 is secured and which itself may be secured to an intended use location. For example, a backing plate may be provided in accordance with our earlier patent, EP1893447. For example, a backing plate may be provided which comprises a substantially flat surface to which the plate 21 may be secured using the adhesive layer. The backing plate may comprise a peripheral upstanding wall (which may be continuous or broken) to at least partially encompass the edge of the plate 21. There may also be provided a second part which fixes to and overlies the backing plate to secure the identification plate therebetween. When using a backing plate as a site-of-use with a number plate, it may be possible to cut through the backing plate when cutting the primary indicia or before or subsequent thereto to provide frangible portions on the number plate and backing plate to further increase security/tamper evidence.

Preferably, the adhesive layer AL comprises a body of flat flexible material which bears adhesive on each of its major faces and is preferably supplied with release liners or layers to protect the adhesive. The first release liner is removed and the adhesive layer is secured to the plate 21. The operation as set out above is then conducted. Once that is done the plate may be stored for subsequent use. Alternatively it may be used immediately. In either case, the use the plate 21 the second release liner is removed to expose free adhesive which is then brought into contact with the site-of-use S to secure the plate in position.

A suitable adhesive for use as the adhesive of the adhesive layer is an acrylic adhesive. The adhesive may be provided on either face of a plastics carrier. Conveniently the material for use as the adhesive layer AL is VHB tape available from 3M United Kingdom plc of Berkshire, UK.

In all disclosed embodiments, one or more of (or at least a part of one or more of) the secondary 26, tertiary 27 or subsidiary 28 indicia may be provided as a transfer, decal or other applied indicia to be sandwiched between the retro-reflective layer and the transparent sheet material.

The adhesive or other means to secure the primary indicia to the substrate is sufficiently strong and robust that an attempt to remove the indicia (or a component thereof) will be frustrated. Attempts to prise the indicia from the substrate will deface the substrate. Moreover, because each of the components of the primary indicia 4, 24, 104 are surrounded by a trench or rebate, should someone seek to remove or change one or more of the components of the primary indicia 4, 24, 104 there is a physical impression on the transparent sheet material of the original component(s) of the primary indicia. Thus, the plates of the invention have a visual tamper evident capacity. Further, because the primary indicia upstand from the substrate it is difficult to simply 'over-sticker' the primary indicia or otherwise obscure or deface a portion thereof, which is possible with other identification (e.g. number) plates.

In all embodiments, the adhesive used to secure the indicia 4, 24, 104 to the transparent sheet material 12, 120, 212 may be a relatively long setting adhesive, for example one which cures in, say, 90 minutes. The cure may be brought about or accelerated by one or more of heat, pressure, light (for example light of a particular frequency) and/or other actinic radiation. A suitable adhesive may be an acrylic adhesive.

One of the advantages of having the indicia 4, 24, 104 upstand from the substrate is that they are likely to be clearer to read by ANPR cameras or other data recognition (e.g. OCR) means and, are less likely to be obscured or obscurable by dirt and other detritus. Moreover, because the indicia 4, 24, 104 upstand from the surface of the substrate, it is possible to use materials having a particular chemical or physical (for example spectroscopic) signature, and which signature will not be obscured by being provided underneath a transparent sheet material, as is the case with prior art number plate constructions. This provides an easy means to check the validity of the characters. Moreover, because of the thickness of the indicia it is possible to provide smart or other monitoring means within the identification plates. For example, RFID chips, (passive or active) can be provided within one or more components of the indicia.

The rebate 12C, 120C, 212C and any extension thereto (212d) need not extend orthogonally to the major surfaces of the plate and may be angled with respect to the major surface, for example to end under the respective indicia.

If the peripheral border is not required, the sheet material from which the primary indicia are to be formed may be located inboard of the periphery of the substrate, for example only over those areas in which indicia are required. Moreover, if the secondary, tertiary or further indicia are formed from raised plastics material, the corresponding sheet material may be coloured differently or the same in those respective areas. Indeed, the peripheral border may be coloured differently or the same by laying down and applying different materials in one or more of the corresponding areas.

It is also possible to deploy the technique discussed above on number plates and/or identification plates formed in accordance with our earlier patent EP1399333. For example, adhesive may be applied across the non-indicia visible face and then a router or other forming/cutting device may be utilised to intermittently cut around one or more indicia components and the adhesive, thereby to make a tamper evident plate.

It is preferred, in all cases where frangible portions are formed, that at least 2 (e.g. at least 3 or at least 4) components of the indicia provide separately frangible portions.

It will be appreciated that the various layers of each plate construction discussed above are typically secured together using adhesives. Except where specifically mentioned the interlayer adhesive has not been specified and for the sake of clarity is not shown in the drawings. However, the skilled person readily knows and is able to select and deploy appropriate adhesives to achieve inter-laminar adhesion.

Although it is not necessary to allow the identification plates to pass environmental tests (for example the tests required by number plate legislation or users) it is possible to cover the primary indicia 4, 24, 104 with a transparent material. This may be a relatively thin sheet material, a lacquer, a spray or a relatively thick layer. However, because it is not necessary it is preferred to omit any such covering.

In any of the above embodiments, the transparent material can bear the adhesive with which the plastic material is adhered thereto, although it is preferred that the plastics material bears the adhesive. In either case the adhesive will typically be covered with a release liner. Alternatively, one or other (or both) of the facing surfaces may be laminated in line with a contact and/or heat and/or actinic radiation-activated adhesive. This may be beneficial in continuous processing of identification plates although it is not necessary. In some embodiments the adhesive may comprise a substrate bearing adhesive on either major face. One such adhesive that can be used is 467 MP 200MP, available from 3M. The material from which primary and/or other indicia are formed need not be ABS and may be other plastics or materials.

Whilst the above has focussed on number plates, the invention is equally applicable to other identification plates where tamper evidence is beneficial and/or desirable and/or where the improved visual performance is required without necessitating the use of thick indicia.

## Claims

1. A method of forming a number plate, the method comprises the steps of:
a) providing a substrate having a first and second major surface;
b) securing to the first major surface of the substrate a sheet material;
c) forming the shape of indicia from the sheet material;
d) removing excess sheet material from around the formed indicia;
**characterised in that** the sheet material has a thickness of at least 0.25mm and further comprising a step e), which occurs sequentially with or subsequent to step c), and which comprises cutting into the substrate.

2. A method according to Claim 1, wherein step e) comprises sequentially or subsequently cutting into the substrate to beyond 5, 10, 15, 20, 25, 30, 35, 40, 45, 50, 55, 60, 65, 70, 75, 80, 85, 90, 95% of the thickness of the substrate at least around a part of the one or more indicia.

3. A method according to Claim 2, wherein step e) comprises sequentially or subsequently cutting through the substrate intermittently to provide a frangible portion corresponding in shape to said indicia.

4. A method according to any proceeding Claim, wherein step c) and/or step e) or step iii) and/or step iv) comprise cutting into the substrate to a width of from 0.1 to 0.9mm, for example from 0.1 to 0.6mm, say from 0.25 to 0.5mm.

5. A method according to any preceding Claim, comprising providing at the second major face of the substrate a substrate adhesive.

6. A method according to Claim 5, comprising cutting through at least some of the substrate adhesive to provide one or more frangible adhesive portions, preferably in the shape of one or more indicia and/or one or more component thereof.

7. A number plate (1, 1', 21, 100) comprising a substrate (10, 110, 210) having a substantially flat first major surface (10A, 110A, 210A) and one or more raised indicia, **characterised in that** the one or more raised indicia (4, 24, 104) extend from 0.25 to 5mm from the surface (10A, 110A, 210A) of the substrate (10, 110, 210), and wherein around at least some of said one or more indicia (4, 24, 104) is a trench or rebate (12C, 120C, 212C) extending from the first major surface (10A, 110A, 210A) into the substrate (10, 110, 210).

8. A plate (1, 1', 21, 100) according to Claim 7, wherein the trench or rebate (12C, 120C, 212C) is extended intermittently around at least a component of the indicia (4, 24, 104), thereby to provide a frangible portion (FP) corresponding to the shape of the at least a component of the indicia (4, 24, 104).

9. A plate (1, 1', 21, 100) according to Claims 7 or 8, wherein the trench or rebate (12C, 120C, 212C) extends outwardly from the periphery of said one or more indicia (4, 24, 104).

10. A plate (1, 1', 21, 100) according to any of Claims 7 to 9, wherein the substrate (10, 110, 210) comprises a retro-reflective material (11, 110, 211).

11. A plate (1, 1', 21, 100) according to any of Claims 7 to 10, wherein the substrate (10, 110, 210) comprises a transparent material (12, 120, 212) at the first major surface (10A, 110A, 210A).

12. A plate (1, 1', 21, 100) according to Claim 11, wherein the transparent material (12, 120, 212) is relatively thin, e.g. less than 1 mm thick, less than 0.9, 0.8, 0.7, 0.6, 0.5, 0.4, 0.3, 0.2, 0.1 mm thick, for example from 10 µm to 999 µm from 50 to 150 µm, and preferably from 55 to 95 µm, or the transparent material (12, 120, 212) is relatively thick, e.g. from 1 to 5 mm thick, say 1.5 to 4.5, 2 to 4, 2.5 to 3.5, for example 3 mm thick.

13. A plate (1, 1', 21, 100) according to Claim 7 to 12, wherein the substrate (10, 110, 210) comprises a plastics or metal backing layer.

## Patentansprüche

1. Ein Verfahren für das Bilden eines Kennzeichenschilds, wobei das Verfahren Folgendes umfasst:
a) Vorsehen eines Substrats mit einer ersten und zweiten Hauptoberfläche,
b) Fixieren eines Blechmaterials an der ersten Hauptoberfläche des Substrats,
c) Bilden der Form von Markierungszeichen aus dem Blechmaterial,
d) Entfernen des überschüssigen Blechmaterials rund um die geformten Markierungszeichen; **dadurch gekennzeichnet, dass** das Blechmaterial eine Stärke von mindestens 0,25 mm aufweist, und ferner umfassend einen Schritt e), der sequenziell auf Schritt c) oder diesem nachfolgend erfolgt, und der das Schneiden in das Substrat umfasst.

2. Verfahren nach Anspruch 1, wobei Schritt e) das sequenzielle oder nachfolgende Schneiden in das Substrat bis über 5, 10, 15, 20, 25, 30, 35, 40, 45, 50, 55, 60, 65, 70, 75, 80, 85, 90, 95 % der Stärke des Substrats zumindest um einen Teil des einen oder der mehreren Markierungszeichen herum umfasst.

3. Verfahren nach Anspruch 2, wobei Schritt e) das sequenzielle oder nachfolgende Schneiden durch das Substrat in unregelmäßigen Abständen umfasst, um einen brüchigen Bereich vorzusehen, dessen Form der der genannten Markierungszeichen entspricht.

4. Verfahren nach einem beliebigen vorhergehenden Anspruch, wobei Schritt c) und/oder Schritt e) oder Schritt iii) und/oder Schritt iv) das Schneiden in das Substrat bis zu einer Breite von 0,1 bis 0,9 mm, beispielsweise von 0,1 bis 0,6 mm, z. B. von 0,25 bis 0,5 mm, umfassen.

5. Verfahren nach einem beliebigen vorhergehenden Anspruch, umfassend das Vorsehen eines Substratklebstoffs an der zweiten Hauptoberfläche des Substrats.

6. Verfahren nach Anspruch 5, umfassend das Durchschneiden zumindest eines Teils des Substratklebstoffs, um eine oder mehrere brüchige Klebstoffbereiche vorzusehen, vorzugsweise in der Form eines oder mehrerer Markierungszeichen und/oder eines oder mehrerer Bestandteile davon.

7. Ein Kennzeichenschild (1, 1', 21, 100), umfassend ein Substrat (10, 110, 210) mit einer im Wesentlichen flachen ersten Hauptoberfläche (10A, 110A, 210A) und ein oder mehrere erhabene Markierungszeichen, **dadurch gekennzeichnet, dass** sich das eine oder die mehreren Markierungszeichen (4, 24, 104) von 0,25 bis 5 mm von der Oberfläche (10A, 110A, 210A) des Substrats (10, 110, 210) erstrecken, und wobei sich um mindestens einige des/der genannten einen oder mehreren Markierungszeichen (4, 24, 104) herum eine Rinne oder Ausfalzung (12C, 120C, 212C) befindet, welche sich von der ersten Hauptoberfläche (10A, 110A, 210A) in das Substrat (10, 110, 210) erstreckt.

8. Schild (1, 1', 21, 100) nach Anspruch 7, wobei sich die Rinne oder Ausfalzung (12C, 120C, 212C) unregelmäßig um mindestens einen Bestandteil der Markierungszeichen (4, 24, 104) herum erstreckt und dadurch einen brüchigen Bereich (FP) vorsieht, welcher der Form des mindestens eines Bestandteils der Markierungszeichen (4, 24, 104) entspricht.

9. Schild (1, 1', 21, 100) nach Ansprüchen 7 oder 8, wobei sich die Rinne oder Ausfalzung (12C, 120C, 212C) von dem Rand des/der genannten einen oder mehreren Markierungszeichen (4, 24, 104) nach außen erstreckt.

10. Schild (1, 1', 21, 100) nach einem beliebigen der Ansprüche 7 bis 9, wobei das Substrat (10, 110, 210) ein retroreflektierendes Material (11, 110 , 211) umfasst.

11. Schild (1, 1', 21, 100) nach einem beliebigen der Ansprüche 7 bis 10, wobei das Substrat (10, 110, 210) ein transparentes Material (12, 120, 212) an der ersten Hauptoberfläche (10A, 110A, 210A) umfasst.

12. Schild (1, 1', 21, 100) nach Anspruch 11, wobei das transparente Material (12, 120, 212) relativ dünn, z. B. weniger als 1 mm stark, weniger als 0,9, 0,8, 0,7, 0,6, 0,5, 0,4, 0,3, 0,2, 0,1 mm stark, beispielsweise von 10 µm bis 999 µm, von 50 bis 150 µm, und vorzugsweise von 55 bis 95 µm stark ist, oder das transparente Material (12, 120, 212) relativ stark, z. B. von 1 bis 5 mm stark, beispielsweise 1,5 bis 4,5, 2 bis 4, 2,5 bis 3,5, beispielsweise 3 mm stark ist.

13. Schild (1, 1', 21, 100) nach Anspruch 7 bis 12, wobei das Substrat (10, 110, 210) eine Kunststoff oder Metallbelagschicht umfasst.

## Revendications

1. Procédé de formation d'une plaque minéralogique, le procédé comprenant les étapes consistant à :
a) utiliser un substrat comportant des première et seconde surfaces majeures ;
b) fixer un matériau en feuille à la première surface majeure du substrat ;
c) former des indications par mise en forme à partir du matériau en feuille ;
d) éliminer le matériau en feuille en excès de la périphérie des indications formées ;
**caractérisé en ce que** le matériau en feuille a une épaisseur d'au moins 0,25 mm, et comprenant en outre une étape e), exécutée séquentiellement ou ultérieurement à l'étape c), et qui consiste à couper dans le substrat.

2. Procédé selon la revendication 1, dans lequel l'étape e) consiste à couper séquentiellement ou ultérieurement dans le substrat sur plus de 5, 10, 15, 20, 25, 30, 35, 40, 45, 50, 55, 60, 65, 70, 75, 80, 85, 90, 95 % de l'épaisseur du substrat au moins autour d'une partie de l'indication ou des indications.

3. Procédé selon la revendication 2, dans lequel l'étape e) consiste à couper séquentiellement ou ultérieurement dans le substrat de façon intermittente pour obtenir une partie fragile correspondant à la forme desdites indications.

4. Procédé selon l'une quelconque des revendications précédentes, dans lequel l'étape c) et/ou l'étape e) ou une étape iii) et/ou une étape iv) consistent à couper dans le substrat sur une largeur allant de 0,1 à 0,9 mm, par exemple de 0,1 à 0,6 mm, disons de 0,25 à 0,5 mm.

5. Procédé selon l'une quelconque des revendications précédentes, consistant à disposer un adhésif de substrat au niveau de la seconde face majeure du substrat.

6. Procédé selon la revendication 5, consistant à couper dans au moins une certaine partie de l'adhésif de substrat pour obtenir une ou plusieurs parties adhésives fragiles, ayant de préférence la forme d'une ou de plusieurs indications et/ou d'un ou de plusieurs de leurs composants.

7. Plaque minéralogique (1, 1', 21, 100) comprenant un substrat (10, 110, 210) comportant une première surface majeure sensiblement plate (10A, 110A, 210A) et une ou plusieurs indications en relief, **caractérisée en ce que** l'indication ou les indications en relief (4, 24, 104) s'étendent sur 0,25 mm à 5 mm de la surface (10A, 110A, 210A) du substrat (10, 110, 210), et dans laquelle une tranchée ou un évidement (12C, 120C, 212C) s'étendant de la première surface majeure (10A, 110A, 210A) est situé dans le substrat (10, 110, 210) autour d'au moins certaines de ladite ou desdites indications (4, 24, 104).

8. Plaque (1, 1', 21, 100) selon la revendication 7, dans laquelle la tranchée ou l'évidement (12C, 120C, 212C) s'étend de façon intermittente autour d'au moins un composant des indications (4, 24, 104), fournissant ainsi une partie fragile (FP) correspondant à la forme du au moins un composant des indications (4, 24, 104).

9. Plaque (1, 1', 21, 100) selon la revendication 7 ou 8, dans laquelle la tranchée ou l'évidement (12C, 120C, 212C) s'étend vers l'extérieur de la périphérie de ladite ou desdites indications (4, 24, 104).

10. Plaque (1, 1', 21, 100) selon l'une quelconque des revendications 7 à 9, dans laquelle le substrat (10, 110, 210) comprend un matériau rétro-réfléchissant (11, 110, 211).

11. Plaque (1, 1', 21, 100) selon l'une quelconque des revendications 7 à 10, dans laquelle le substrat (10, 110, 210) comprend un matériau transparent (12, 120, 212) au niveau de la première surface majeure (10A, 110A, 210A).

12. Plaque (1, 1', 21, 100) selon la revendication 11, dans laquelle le matériau transparent (12, 120, 212) est relativement mince, par exemple a une épaisseur inférieure à 1 mm, une épaisseur inférieure à 0,9, 0,8, 0,7, 0,6, 0,5, 0,4, 0,3, 0,2, 0,1 mm, allant par exemple de 10 µm à 999 µm, de 50 à 150 µm, et l'on préfère de 55 à 95 µm, ou le matériau transparent (12, 120, 212) est relativement épais, par exemple a une épaisseur de 1 à 5 mm, disons de 1,5 à 4,5, de 2 à 4, de 2,5 à 3,5, par exemple de 3 mm.

13. Plaque (1, 1', 21, 100) selon l'une quelconque des revendications 7 à 12, dans laquelle le substrat (10, 110, 210) comprend une couche de renfort en plastique ou en métal.
